# EUROPEAN PATENT SPECIFICATION

(11) **EP 0 535 114 B1**
(45) Date of publication and mention of the grant of the patent: **02.11.1995**
(21) Application number: 91912002.2
(22) Date of filing: 05.06.1991
(51) Int. Cl.: F16F 7/00, F16F 15/04, F16F 1/36

(54) **LINKAGE ROD**
GELENKSTAB
BIELLE DE LIAISON

(30) Priority: 22.06.1990 US 542166
(43) Date of publication of application: 07.04.1993
(73) Proprietor: APPLIED POWER INC., Milwaukee, WI 53201-0325 (US)
(72) Inventor: SMITH, Gary, T., Canyon Country, CA 91351 (US); JENSEN, William, S., Canoga Park, CA 91306 (US); BANKS, Edwin, Lakeview Terrace, CA 91342 (US); POKK, Andy, Simi Valley, CA 93065 (US); TEETER, Michael, R., Canoga Park, CA 91306 (US)
(74) Representative: Grünecker, Kinkeldey, Stockmair & Schwanhäusser Anwaltssozietät
(86) International application number: US9103958
(87) International publication number: WO9200467

(56) References cited:
- DE-A- 2 406 144
- DE-A- 2 923 344
- DK-A- 121 108
- FR-A- 2 262 233
- US-A- 4 074 896

## Description

The present invention relates to a linkage rod, for absorbing shocks and vibrations as indicated in the preamble portion of claim 1, claim 9 and claim 15.

Linkage rods of the present type are used to connect components of mechanisms which are subject to shock and vibration loads causing both compression and tension. One particular application for this type of linkage rod is on aircraft landing gear. The landing gear is frequently subjected to short duration, high acceleration compressive impulses.

Presently, linkage rods incorporate solid connections between the ends of the linkage rod. These rods often do not provide adequate compliance between the connected points, resulting in excessive forces being transmitted through the rods. Additionally, the resultant stiffness may contribute to a system that has inadequate overall compliance and an inappropriately placed resonant frequency for the input impulses.

A linkage rod for absorbing shocks and vibrations having a housing for mounting the linkage rod, a piston axially moveable in the central bore and a resilient member positioned in the central bore such that an axial movement of the piston causes compression of the resilient member is also known from U.S. Patent No. 4,074,896, underlying the preamble portion of claims 1 and 9. FR-A-2,263,233 showing the prior art as defined by the preamble portion of claim 15 discloses a linkage rod having a housing with two shafts at the ends with resilient elements connecting the housing and the shafts. However, in these devices, movement of the piston or shafts is not limited in either direction and therefore the resilient members and the housing are subject to being overstressed.

It is therefore an objective of the present invention to provide a linkage rod for absorbing shocks and vibrations, the components of said linkage being prevented from being overstressed.

This objective is performed according to the present invention by improving the linkage rods as indicated in the preamble portion of claims 1, 9 and 15 by providing them with the features described in the respective characterising portions.

In a preferred embodiment of the invention according to the linkage rod defined by claim 1, the linkage rod includes the characterising features of claim 6

This aspect of the invention also beneficially reduces the shock and vibration forces that are transmitted through the linkage rod. One component in the system is attached to the housing, while a second component is attached to the mounting member. The linkage rod allows relative movement between the mounting member and the housing, and thus between the attached components in the system. The movement causes compression of the resilient member. The resilient member resists compression and absorbs a portion of the energy being transmitted into the linkage rod by shock and vibration impulses. The linkage rod reduces the amount of stress at the load points and thereby reduces the amount of wear to the moving components of the linkage rod.

The resilient member is preferably fabricated from relatively fine strands of crimped wire that are compressed together into a cushion. As the resilient member is compressed, a greater portion of each strand contacts the neighboring strands. The resilient member thus provides non-linear resistance to compression of the resilient member itself, and of the linkage rod. The resilient member reduces the tendency of system components to resonate at or near undesirable impulse frequencies, thereby eliminating amplification of accelerations at these frequencies.

The amount of axial movement of the mounting member relative to the housing is limited by the inwardly-directed wall of the snubber cap. Compression of the linkage rod will eventually cause the shoulder of the mounting member to contact the inwardly-directed wall and stop further compression. After this point, additional compressive forces are transmitted through the mounting member, the snubber cap and the housing. Thus, the maximum amount of compression of the resilient member may be selected to prevent damage to the resilient member. Under tension loads, the snubber nut contacts the inwardly-directed wall. In this way, tension loads are transmitted directly through the housing, the snubber cap, the snubber nut and the mounting member.

In another aspect of the invention, the linkage rod also includes a spacer tube positioned in the central bore of the housing. The length of the spacer tube determines the amount of compression of the resilient member prior to mounting the linkage rod. By varying the preload condition of the resilient member, the threshold compressive force required to initiate compression of the linkage rod may be selected. This arrangement also allows modification of the response characteristics of the resilient member. The response characteristics may be chosen to prevent resonance of the mechanism components at or near undesirable impulse frequencies.

In another aspect, the linkage rod includes a pair of load plates positioned in the central bore on opposite sides of the resilient member. This aspect addresses a problem associated with present linkage rods by creating a large bearing area for the resilient member.

In a preferred embodiment of the linkage rod according to claim 9, the bushing cap has a central cavity and the snubbing end of the shaft is slidably positioned in the central cavity. This aspect assists in slidably mounting the shaft within the housing, and also results in large compressive forces being reacted out through the housing. When a compressive load is applied to the linkage rod, the load ring compresses a resilient member and the snubbing end of the shaft moves further into the central cavity. After a particular amount of force is reached, however, the snubbing end of the shaft abuts the bushing cap to prevent further compressive movement of the shaft. Additional compressive force is thereafter transmitted through the shaft and the housing without further compression of the resilient member.

In another aspect, a load washer is mounted in the central bore and a first resilient member is positioned between the load ring and the load washer. A washer cap is secured to the second end of the housing and a second resilient member is positioned between the load ring and washer cap. In this aspect, resilient members are positioned on opposite sides of the load ring to resist both compression and extension of the linkage rod.

In a preferred embodiment of the linkage rod as defined by claim 15, the linkage rod includes first and second washer caps secured to the ends of the housing. The washer caps have central openings for the shaft members to pass therethrough. A third resilient member is positioned in the central bore between the first washer cap and the first load ring. Axial movement of the first shaft member in an opposite direction relative to the housing causes compression of the third resilient member. A fourth resilient member is positioned in the central bore between the second washer cap and the second load ring. Axial movement of the second shaft member in an opposite direction relative to the housing causes compression of the fourth resilient member. This aspect results in the separate shaft members encountering resistance to movement during both compression and extension of the linkage rod.

Further preferred embodiments are subject-matter of subclaims 5, 8 and 12 to 14.

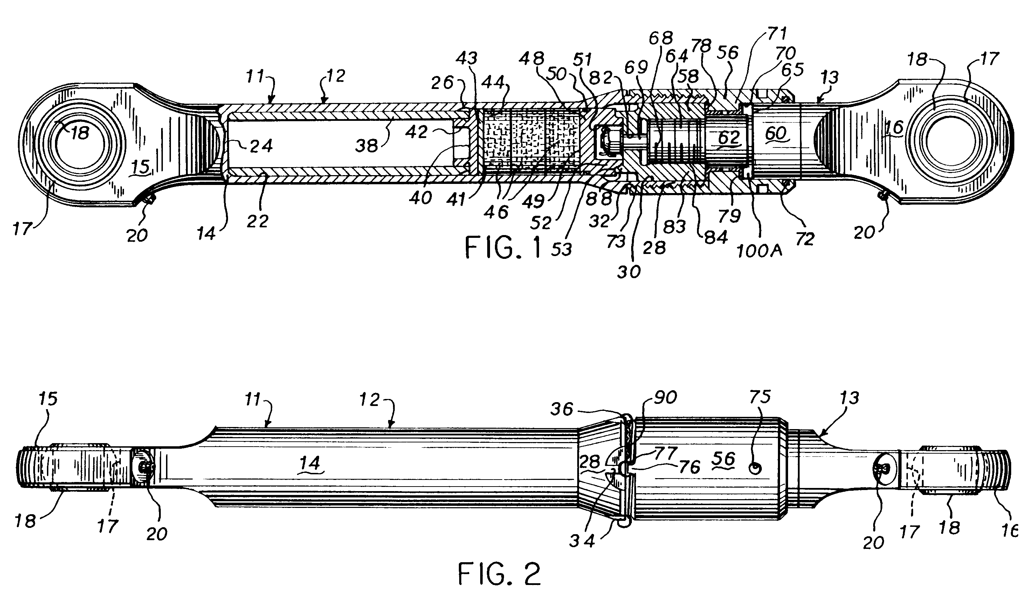

The present invention will be explained in greater detail in the following description, wherein reference will be made to the accompanying drawings which illustrate preferred embodiments of the present invention, and wherein:
Fig. 1 is a top view of a linkage rod according to the present invention, with portions broken away and portions shown in section for the purposes of illustration;
Fig. 2 is a side view of the linkage rod shown in Fig. 1;
Fig. 3 is an enlarged top view of a portion of the linkage rod shown in Fig. 1, with portions shown in section for the purposes of illustration, and with the linkage rod being depicted in a fully compressed position;
Fig. 4 is a perspective view of a resilient member of the linkage rod shown in Figs. 1-3;
Fig. 5 is a side view with portions shown in section of a second embodiment of the linkage rod shown in Figs. 1-3;
Fig. 6 is a side view with portions shown in section of a third embodiment of the linkage rod shown in Figs. 1-3;
Fig. 7 is a side view with portions shown in section of a fourth embodiment of the linkage rod shown in Fig. 1-3; and
Referring to Figs. 1 and 2, a shock and vibration absorbing linkage rod 11 according to the invention is comprised of a housing assembly 12, a snubber cap 56 and a pision assembly 13. The housing assembly 12 includes a cylinder or housing 14 with an integral mounting portion 15. The piston assembly 13 has a similar mounting member 16. Both the mounting portion 15 and the mounting member 16 have apertures 17 that house spherical bearings 18. Lubrication fittings 20 in the mounting portion 15 and the mounting member 16 supply lubrication to the spherical bearings 18, which define the load points for the linkage rod 11. The linkage rod 11 is designed to be mounted between components of a mechanism which receives compression and tension shock and vibration loads, such as aircraft landing gear.

The elongated housing 14 has a cylindrical central bore 22 that terminates in an end wall 24. The central bore 22 has several different internal diameters due to a taper 26 and an expanded portion 28 of the housing 14. The central bore 22 includes an intermediate bore portion 44 formed between the taper 26 and the expanded portion 28 and a widened bore portion 30 formed in the expanded portion 28. The central bore 22 could alternatively be formed with a uniform inside diameter, if corresponding changes were made to the linkage rod components which reside in the central bore. The central bore 22 is open adjacent the expanded portion 28, which includes external threads 32. Adjacent the threads 32, the exterior of the housing 14 includes a series of ridges 34 (Fig. 2) with holes 36.

The housing assembly 12 is constructed by inserting a number of components into the central bore 22 of the housing 14. First, a hollow spacer tube 38, formed of a high-strength material, is positioned in the central bore 22 against the end wall 24. The length of the spacer tube 38 may vary, as discussed more fully below, but is preferably not less than the distance between the end wall 24 and the taper 26.

Next, a spacer load plate 40, also formed of a high-strength material, is positioned in the central bore 22 against the spacer tube 38. The spacer load plate 40 has a main surface or face 41 and an opposite projecting ring 42. The ring 42 inserts into the center of the hollow spacer tube 38 to maintain the spacer load plate 40 against the spacer tube. The spacer load plate 40 is sized to fit within the intermediate bore portion 44 of the central bore 22.

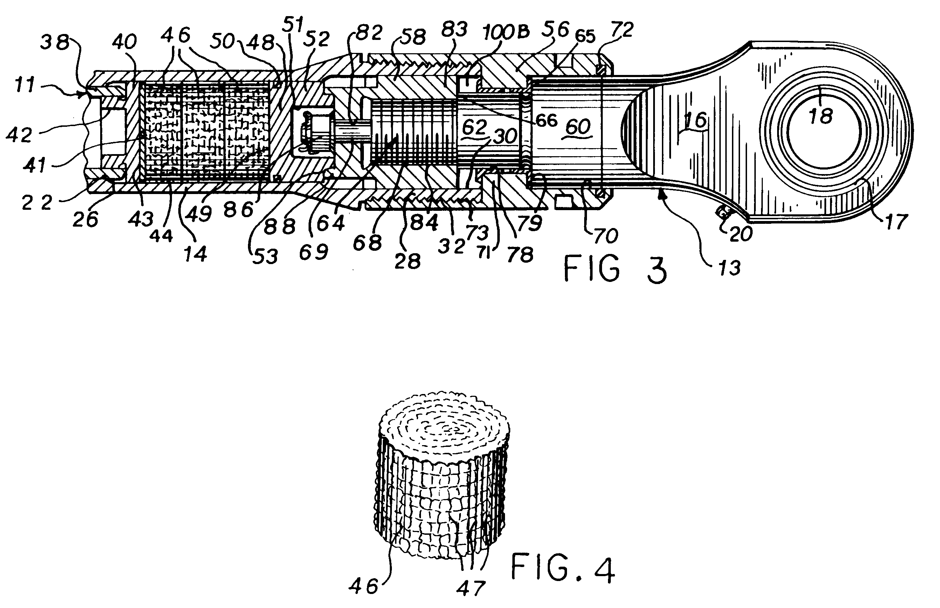

As shown in Figs. 1, 3 and 4, the housing assembly 12 also includes several resilient members 46. The resilient members 46 are preferably fabricated from relatively fine strands of wire, shown generally as reference numeral 47 (Fig. 4). The strands 47 are preferably a high-strength corrosion resistant wire, such as stainless steel wire. The resilient members 46 are formed by compressing and shearing the wire strands 47 into cylindrical bundles or cushions. The individual strands 47 are crimped with closely spaced lateral curves to produce a generally undulating shape. When the strands 47 are compressed into a bundle, numerous portions of each strand contact the neighboring strands. Additional compression of the resilient member 46 causes a greater portion of each strand 47 to be in contact with the neighboring strands.

The disc-shaped resilient members 46 are sized to fit within the intermediate bore portion 44 of the central bore 22. Three resilient members 46 (the number may vary as described below) are placed adjacent one another in the intermediate bore 44, against the face 41 of the spacer load plate 40 (or against shim 43 as discussed below). The resilient members 46 are placed in the central bore 22 so that the strands 47 generally align with the longitudinal axis of the housing 14. Other types of resilient members, such as heavy springs or elastomeric materials, may be substituted in some applications for the metal wire resilient members 46.

A piston load plate 48 is next inserted into the central bore 22 so that a face 49 of the load plate 48 is positioned against the resilient members 46. The piston load plate 48 is formed of a high-strength material and sized to fit in the intermediate bore portion 44 of the central bore 22. A back-up ring 50 fits within a groove in the piston load plate 48 to seal against the inside wall of the central bore 22. The back-up ring 50, which may be formed of a plastic material in two split-ring portions, prevents migration of any wire fragments that may result from deterioration of the resilient members 46. The piston load plate 48 is also formed with a rim 52 that defines a chamber 51 and terminates in an outer ledge 53. When the piston load plate 48 is inserted into the central bore 22, the rim 52 extends toward the open end of the housing 14.

To aid in assembly of the linkage rod 11, a thin disc-shaped shim 43 may be positioned in the central bore 22 between the spacer load plate 40 and a resilient member 46. The shim 43 is useful to compensate for variations in the length of components of the linkage rod 11 (i.e., the housing 14, spacer tube 38, spacer load plate 40, piston load plate 48, etc.). The shim 43 may be removed, or additional shims added, to negate the effect of the stack up of manufacturing tolerances. By using shims 43, the desired amount of compression of the resilient members 46, and thus the desired distance between the spherical bearings 18, may be established for a given load on the linkage rod 11. This completes the construction of the housing assembly 12.

As shown most clearly in Fig. 3, the piston assembly 13 includes the mounting member 16 and a snubber nut 58. The piston assembly 13 is slidable relative to the snubber cap 56. Extending away from the aperture 17 for the spherical bearing 18, the mounting member 16 has a body portion 60, a neck portion 62 and a head portion 64. An annular shoulder 65 is formed between the body portion 60 and the neck portion 62. Similarly, a nut engagement surface 66 (Fig. 3) is formed between the neck portion 62 and the smaller head portion 64. The head portion 64 has external threads 68 and a longitudinally-extending projection 69, which also has external threads (not shown).

The snubber cap 56 is generally cylindrical with a central opening 70 having an inwardly-directed annular wall 71. On one side of the inwardly-directed wall 71, the snubber cap 56 has internal threads 73 that are adapted to mate with the external threads 32 of the housing 14. The snubber cap 56 can thereby be fixed relative to the housing 14. The central opening 70 is sized to slidably receive the body portion 60 of the mounting member 16. The snubber cap 56 includes a groove for a scraper seal 72, which seals between the snubber cap and the mounting member 16 to prevent contaminants from entering the linkage rod 11. The outside of the snubber cap 56 (see Fig. 2) has several wrench holes 75 and a number of ridges 76 with holes 77 therethrough.

When the snubber cap 56 is positioned around the body portion 60 of the mounting member 16, the inwardly-directed wall 71 radially surrounds the neck portion 62 of the mounting member 16. The smaller head portion 64 and projection 69 pass through the inwardly-directed wall 71 of the snubber cap when positioning the snubber cap 56 on the mounting member 16. A pair of snubber bushings 78 and 79, formed of bronze or other high strength non-metal material, are press fitted, epoxied and/or otherwise suitably fastened to the snubber cap 56. Each snubber bushing 78 and 79 has an axially-extending flange that is positioned between the neck portion 62 and the inwardly-directed wall 71. The snubber bushings 78 and 79 decrease wear of the piston assembly 13 and the snubber cap 56. The bushings 78 and 79 also reduce noise which would result if the snubber nut 58 and the mounting member 16 (both of which may be made of metal) were allowed to directly contact the inwardly-directed wall 71 (which may also be made of metal).

The snubber nut 58 has a central aperture 82 and a ring portion 83. The ring portion 83 is sized to fit in the widened bore portion 30 of the housing 14. The ring portion 83 has internal threads, located at reference numeral 84, that are adapted to mate with the external threads 68 of the head portion 64. When the threads 68 and 84 are engaged, the projection 69 of the mounting member 16 extends through the central aperture 82 of the snubber nut 58. The head portion 64 will threadably insert into the ring portion 83 until the ring portion contacts the nut engagement surface 66. A washer, nut and cotter pin arrangement 86 (Fig. 3) attaches to the threaded projection 69 to lock the snubber nut 58 in place relative to the head portion 64. The snubber nut 58 also includes an axially-extending lip 88 (Fig. 3).

Assembly of the linkage rod 11 is completed by securing the snubber cap 56 to the housing assembly 12. A wrench is inserted into wrench holes 75 (Fig.2) to rotatably engage the internal threads 73 of the snubber cap 56 with the external threads 32 of the housing 14. As the snubber cap 56 is threaded onto the housing 14, the snubber nut 58 slides into the widened bore 30 of the housing. The lip 88 of the snubber nut 58 securely contacts the ledge 53 of the piston load plate 48. The washer, nut and cotter pin arrangement 86 on the projection 69 fit within the chamber 51 of the piston load plate 48. The snubber cap 56 is threaded onto the housing 14 until the end of the housing 14 until the end of the housing 14 (adjacent external threads 32) contacts the inwardly-directed wall 71. This assembly preferably results in some preload compression of the resilient members 46. A locking safety chain 90 (Fig. 2) is strung between the holes 36 in the housing 14 and the holes 77 in the snubber cap 56 to lock the snubber cap 56 in place and prevent the threads 73 and 32 from backing out.

In the linkage rod 11 shown in Figs. 1-3, the piston assembly 13 can move longitudinally a limited distance relative to the housing 14. Thus, the linkage rod 11 can move between an extended position (Figs. 1 and 2) and a compressed position (Fig. 3) in response to various loads applied at the spherical bearings 18. In the preferred mode of operation, the linkage rod 11 is mounted with a static compressive load so that the linkage rod is normally in an intermediate position between the extended and compressed positions. From this intermediate position, dynamic compression and tension shocks and vibrations cause the linkage rod 11 to oscillate about the intermediate position.

The linkage rod 11 is capable of compressing from the extended position in part because the piston assembly 13 (mounting member 16 and snubber nut 58) can move relative to the snubber cap 56. The distance between the snubber nut 58 and the shoulder 65 is greater than the combined width of the inwardly-directed wall 71 and the snubber bushings 78 and 79. In the extended position (Fig. 1), the ring portion 83 of the snubber nut 58 is pressed by the preload of the resilient members 46 (and by any external tension force) into contact with the snubber bushing 78. This forms a gap 100A between the opposite snubber bushing 79 and the shoulder 65.

When the linkage rod 11 is mounted under a static compressive load, such as with aircraft landing gear, the piston assembly 13 slides relative to the housing 14 so that the distance between the spherical bearings 18 is reduced. This reduces the size of gap 100A. Concurrently, the snubber nut 58 and the piston load plate 48 slide further into the central bore 22 of the housing. The resilient members 46 normally compress due to the compressive load, and provide increasing resistance to establish the intermediate position of the linkage rod. The position of the linkage rod 11 upon mounting will depend on the intensity of the static compressive load, the preload of the resilient members 46, and the compression characteristics of the resilient members.

When a dynamic compression or tension shock impulse is applied to the linkage rod 11, the rod tends to oscillate about the intermediate position. Compressive shocks cause the mounting member 16, snubber nut 58 and piston load plate 48 to slide further into the central bore 22. This compresses the resilient members 46 from their intermediate position, but the resilient members 46 resist compression in a non-linear manner. As the resilient members 46 are compressed, more of the individual wire strands 47 are in contact so that resistance to further compression is enhanced. The resilient members 46 advantageously absorb energy being transmitted into the linkage rod 11 by the compressive impulse, and release the energy over a longer period of time. In this way, the resilient members 46 reduce the tendency of the attached structures to resonate at or near the impulse frequency. Additionally, the resilient members 46 reduce the maximum force at the load points and in the linkage rod 11.

Tension shocks detract from the static compression load on the linkage rod 11. Under the influence of a tension shock or vibration, the resilient members 46 will rebound and the linkage rod 11 will approach the extended position (Fig. 1). When the tension load is reduced, the static compression load causes the linkage rod 11 to once again approach the intermediate mounting position, i.e., somewhere between the fully extended and compressed positions. Overall, the linkage rod 11 attenuates the undesirable shock or vibration loads and alters the structural resonances of the connected mechanisms.

The linkage rod 11 is designed to react out compressive loads which exceed the desired compression range for the resilient members 46. As a compressive load increases, the shoulder 65 of the mounting member 16 moves closer to the snubber bushing 79. The resilient members 46 provide an increasing amount of resistance to the compression until the shoulder 65 contacts the snubber bushing 79. In this fully compressed position of the linkage rod 11, a gap 100B (Fig. 3), which is equal in size to gap 100A, is formed between the snubber nut 58 and snubber bushing 78. At this point, additional compressive loads bypass the resilient members 46 and are transmitted between the connected structures through the mounting member 16, the snubber cap 56 and the housing 14. The resilient members 46 will return the linkage rod 11 to the intermediate position (allowing for some oscillation) when the compressive load is reduced.

The linkage rod 11 is also designed to react out extreme tension loads. As a dynamic tension load increases in magnitude, the spherical bearings 18 move further apart in opposition to the static compressive load caused by mounting the linkage rod 11. The snubber nut 58 consequently moves closer to the snubber bushing 78. For sufficiently large tension loads, the snubber nut 58 contacts the snubber bushing 78 to place the linkage rod 11 in the extended position (Fig. 1). Additional tension loads are reacted out directly through the housing 14, snubber cap 56, snubber nut 58 and mounting member 16. When the tension load is reduced, the static compressive load returns the linkage rod 11 to the intermediate position (allowing for some oscillation).

The stiffness of the resilient members 46 may be altered by modifying the length of the spacer tube 38. Using a longer spacer tube (not shown) applies greater preload compression to the resilient member 46. With a longer spacer tube, the initial force required to begin compression of the linkage rod 11 is greater, compared to the force required when using a shorter spacer tube. Conversely, the preload compression of the resilient members 46 may be reduced by shortening the spacer tube 38.

In addition to changing the threshold level of force required to initiate compression of the linkage rod 11, modifying the stiffness of the resilient members changes the effective rebound characteristics of the resilient members 46 and thus the linkage rod 11. The response characteristics of the linkage rod 11 may be selected so that the attached structures will not resonate at or near the impulse frequency. The stiffness of the linkage rod 11 may also be altered by incorporating resilient members with modified compression characteristics. Further modification of the linkage rod 11 performance is possible by altering the number of resilient members 46. In any case, use of the spacer load plate 40 and the piston load plate 48 on opposite sides of the resilient members 46 beneficially provides large bearing surfaces for the resilient members 46.

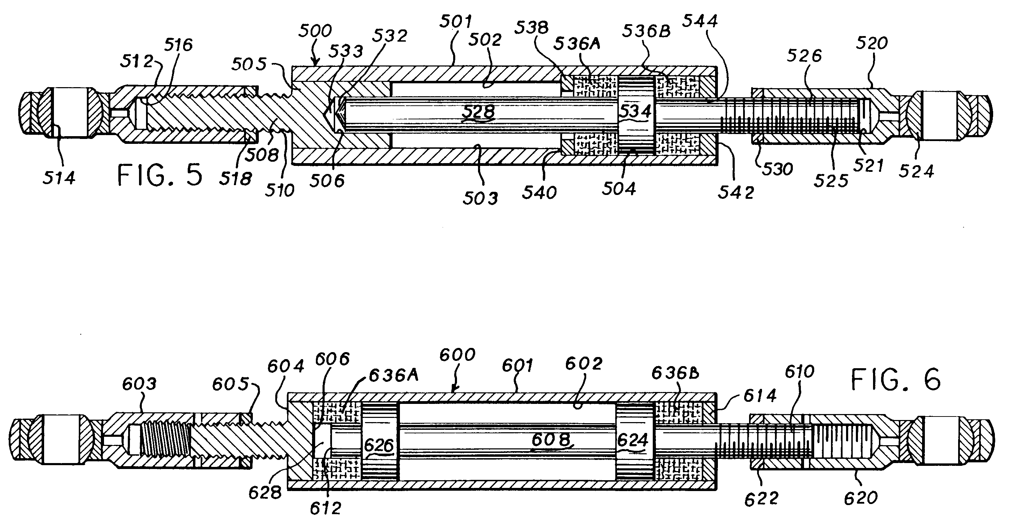

An alternate embodiment of the invention is illustrated by linkage rod 500 of Fig. 5. A tubular housing 501 is formed with the central bore 502 that has a narrow portion 503 and an enlarged portion 504. A bushing cap 505 is welded or otherwise suitably fastened within the narrow portion 503 of the central bore 502. The bushing cap 505 has a central cavity 506 and a finger 508 projecting outside the housing 501. The finger 508 has external threads 510 for attaching a first mounting member 512. The first mounting member 512 includes a spherical bearing 514 and a threaded central opening 516. A jam nut 518 is threadably mounted on the external threads 510 of the finger 508 to lock the first mounting member 512 in position relative to the finger 508.

Similarly, a second mounting member 520 has a threaded central opening 521 and a spherical bearing 524 for mounting the linkage rod 500. The second mounting member 520 is rotatably attached to external threads 525 of a projecting end 526 of a shaft 528. A jam nut 530 is mounted on the projecting end 526 to lock the second mounting member 520 in position relative to the shaft 528.

The shaft 528 is slidably mounted within the housing 501 of the linkage rod 500. Opposite the projecting end 526, a snubbing end 532 of the shaft 528 is slidably received within the cavity 506 of the bushing cap 505. A gap 533 is formed between the snubbing end 532 and the bushing cap 505. The shaft 528 includes a radially-extending load ring 534 that slides within the enlarged portion 504 of the central bore 502.

A pair of resilient members 536A and 536B are mounted on the shaft 528 in the enlarged portion 504 of the central bore 502. The resilient members 536A and 536B are preferably formed in the same manner as resilient members 46 (Figs. 1-4), although shaped into an annulus rather than a cylinder. Other resistive devices, such as springs or elastomeric material, could be employed instead of the wire strand resilient members. One resilient member 536A is positioned between the load ring 534 and a load washer 538. The load washer positioned against a step 540 formed between the enlarged portion 504 and the narrow portion 503.

A second resilient member 536B is mounted around the shaft 528 on the opposite side of the load ring 534. This resilient member 536B is maintained within the enlarged portion 504 of the central bore 502 by a washer cap 542. The washer cap 542 has a central opening 544 and an outside diameter sized to fit within the enlarged portion 504 of the housing 501. The washer cap 542 is welded or otherwise suitably fastened to the housing 501 with the shaft 528 projecting through the central opening 544. The resilient members 536A and 536B are preferably loaded so that they will remain at least partially compressed through the full movement of the shaft 528.

In operation, the linkage rod 500 is mounted between two structures using the spherical bearings 514 and 524. The operating length of the linkage rod 500 may be controlled by changing the amount that the finger 508 is inserted into the first mounting member 512 and the amount that the projecting end 526 is inserted into the second mounting member 520.

As a compressive impulse is generated at the mounting members 512 and 520, the shaft 528 tends to move further into the central bore 502 of the housing 501. Movement of shaft 528 compresses resilient member 536A between the load ring 534 and the load washer 538. The resilient member 536A provides non-linear resistance to compression of the linkage rod 500, and the energy absorbed by the resilient member 536A is released over a longer period of time. For tension impulses, the linkage rod 500 functions in a similar manner, with resilient member 536B providing non-linear resistance to extension. The resilient members 536A and B consequently lower the maximum forces at the load points and in the linkage rod 500, thereby reducing stress in the mounting members 512 and 520 and reducing wear of the moving components.

For compressive forces exceeding the desired compression range of the resilient member 536A, the linkage rod 500 is designed to translate these forces between the attached structures through the mounting members 512 and 520, the bushing cap 505 and the shaft 528. As the linkage rod 500 is compressed, the snubbing end 532 of the shaft 528 slides further into the cavity 506 of the bushing cap 505, thus decreasing the size of gap 533. When the snubbing end 532 contacts the bushing cap 505, additional compressive force will be transmitted through the linkage rod 500 without further compression of the resilient member 536A.

As the compressive force is reduced, the resilient member 536A will tend to rebound to its original position, where the load ring 534 is centered between the washer cap 542 and the load washer 538. Note that even when resilient member 536A is fully compressed, resilient member 536B may exert a force tending to move the load ring 534 toward the load washer 538. Nonetheless, the net force of both resilient members 536A and 536B tends to move the load ring 534 toward a centered position between the load washer 538 and the washer cap 542. Oscillation of the shaft 528 past the centered position will be resisted by resilient member 536B. Extension of the linkage rod 500 is thus resisted in a non-linear manner due to compression of the resilient member 536B.

Another embodiment of the invention is illustrated by the linkage rod 600 of Fig. 6. A tubular housing 601 of the linkage rod 600 has a uniform central bore 602. A first mounting member 603 is rotatably attached to a bushing cap 604 and secured by a jam nut 605. The bushing cap 604 is welded or otherwise suitably fastened to the housing 601 so that a face 606 of the bushing cap is located in central bore 602 of the housing 601.

A shaft 608 has a threaded projecting end 610 and an opposite snubbing end 612. The shaft 608 is positioned in the housing 601 with the projecting end 610 passing through a washer cap 614 that is attached to the housing. A second mounting member 620 is threadably attached to the projecting end 610 and secured by a jamb nut 622. The shaft 608 includes a first and second load rings 624 and 626, which are sized to slidably fit within the central bore 602 of the housing 601.

Before attaching the washer cap 614 to the housing 601 or the second mounting member 620 to the shaft 608, a pair of annular resilient members 636A and 636B are mounted around the shaft. One resilient member 636A is mounted on the snubbing end 612 and thereby forms an initial gap 628 between the snubbing end 612 and the face 606 of the bushing cap 604. The resilient member 636A provides non-linear resistance to compression of the linkage rod 600. The distance between the snubbing end 612 and the face 606 can be established so that the shaft 608 contacts the bushing cap 604 when the compression exceeds that desired for the resilient member 636A.

A second resilient member 636B is mounted on the shaft 608 between the first load ring 624 and the washer cap 614. This resilient member 636B will resist extension of the linkage rod 600 due to tension loads. The resilient members 636A and 636B tend to dampen oscillations caused by compression or tension impulses.

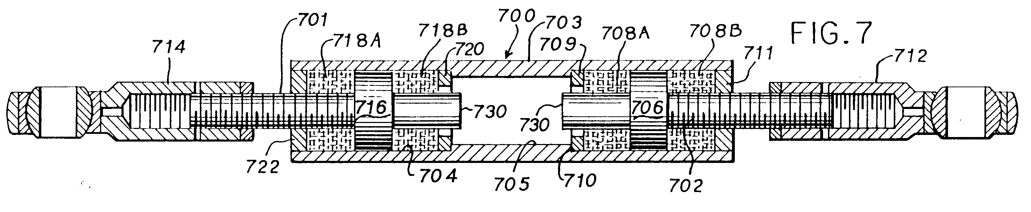

The embodiment of the invention represented by linkage rod 700 in Fig. 7 includes a pair of shaft members 701 and 702 which are mounted within a tubular housing 703. The housing 703 has a central bore 704 that includes a narrow middle portion 705. A load ring 706 of shaft member 702 is sized to slidably fit in the central bore 704. The load ring 706 is surrounded by annular-shaped resilient members 708A and 708B. One resilient member 708A is trapped between the load ring 706 and a load washer 709 that is pressed against a shoulder 710 formed adjacent the narrow portion 705 of the housing 703. The other resilient member 708B is maintained against the load ring 706 due to a washer cap 711. Shaft member 702 extends through a central opening of the washer cap 711 and threadably engages a mounting member 712.

The other side of the linkage rod 700 is formed identically with a mounting member 714 threadably attached to the shaft member 701. A load ring 716 of the shaft member 701 is located between a pair of annular resilient members 718A and 718B. The resilient members 718A and 718B are maintained between a load washer 720 and a washer cap 722.

Compressive forces applied to this linkage 700 are resisted by resilient members 708A and 718B. A short duration, high acceleration impulse at the load points causes the shaft members 701 and 702 to move toward one another. Resilient member 708A will be compressed between the load ring 706 and the load washer 709, and resilient member 718B will be compressed between the load ring 716 and the load washer 720. Both resilient members 708A and 718B provide non-linear resistance, and release energy absorbed from the impulse over a longer period of time.

Although not shown in Fig. 7, the shaft members 701 and 702 could be somewhat longer so that opposing faces 730 of the shaft members would be spaced apart by only a small gap. The gap could be sized so that the shaft members 701 and 702 contact one another when the compressive force on the linkage rod 700 reaches the desired maximum compression range of the resilient members 708A and 718B. This would result in a snubbing effect that would translate excessive compression forces through the shaft members 701 and 702 and mounting members 712 and 714, rather than through the resilient members 308A and 318B.

Upon reduction of the compression force, resilient members 708A and 718B tend to move the load rings 706 and 716 back to their original, centered positions. Resilient members 708B and 718A provide non-linear resistance to extension of the linkage rod 700, thereby reducing the tendency of the linkage rod to oscillate in response to compressive shocks and vibrations. These resilient members 708B and 718A similarly resist tension loads applied to the linkage rod 700.

The foregoing detailed description has been for the purpose of illustration. Thus, a number of modifications and changes may be made without departing from the scope of the present invention defined by the independent claims. For example, the bores of the housings could be formed with different internal contours to eliminate the need for items such as the load washers, spacer tubes and spacer load plates. Likewise various components such as the spacer tube 38, and the spacer load plate 40, could be combined into a single component, or formed integrally with the housing. Therefore, the invention should not be limited by the specific embodiments described, but only by the claims.

## Claims

1. A linkage rod (11) for absorbing shocks and vibrations, comprising an elongated cylinder (14) having a central bore (22) open at an open end of the cylinder (14); a resilient member (46) positioned in the central bore (22); a snubber cap (56) secured to the cylinder (14) adjacent the open end, the snubber cap (56) having a central opening with a radially inwardly-directed wall (71); a piston assembly (13) slidably positioned in the central opening of the snubber cap (56), the piston assembly (13) being capable of limited axial movement relative to the snubber cap (56) and the cylinder (14), the movement of the piston assembly (13) in one direction causing compression of the resilient member (46); and means (15, 16) for mounting the linkage rod (11),
**characterised in that**
the movement is limited in both directions by contact of the piston assembly (13) with the radially inwardly-directed wall (71).

2. A linkage rod (11) as claimed in claim 1, **characterised in that** said means (15, 16) for mounting the linkage rod (11) includes a mounting member (16) for mounting the piston assembly the piston assembly (13) includes a snubber nut (58) attached to the mounting member (16), and the radially inwardly-directed wall (71) is trapped between the mounting member (16) and the snubber nut (58).

3. A linkage rod (11) as claimed in claim 1 or 2, **characterised in that** the resilient member (46) is formed from relatively fine strands of crimped wire.

4. A linkage rod (11) as claimed in at least one of claims 1 to 3, **characterised by** a spacer tube (38) positioned in the central bore (22), the length of the spacer tube (38) establishing the amount of compression of the resilient member (46) prior to mounting the linkage rod (11).

5. A linkage rod (11) as claimed in at least one of claims 1 to 4, **characterised in that** the radially inwardly-directed wall (71) has snubber bushings (78, 79) mounted thereon.

6. A linkage rod (11) as claimed in claim 2,
**characterised in that**
the cylinder (14) has a closed end (24) opposite from the open end;
the means (15, 16) for mounting the linkage rod includes a mounting portion (15) adjacent to the closed end (24);
the mounting member (16) has a body portion (60);
a neck portion (62) adjacent to the body portion (60);
a shoulder (65) formed between the body (60) and neck (62) portions; and
the snubber nut (58) is fastened to the mounting member (16) and is spaced apart from the shoulder (65), wherein the radially inwardly directed wall (71) is trapped between the shoulder (65) and the snubber nut (58) and
the mounting member (16) adjacent to the body portion (60) is capable of limited axial movement relative to the snubber cap (56), the movement causing compression of the resilient member (46).

7. A linkage rod (11) as claimed in at least one of claims 1 to 6, **characterised by** a pair of load plates (40, 48) positioned in the central bore (22) on opposite sides of the resilient member (46).

8. A linkage rod (11) as claimed in claim 6,
**characterised in that**
the mounting member (16) has a head portion (64) adjacent the neck portion (62);
a nut engagement surface is formed between the head (64) and neck (62) portions; and
the snubber nut (58) is fastened to the head portion (64) so that the snubber nut (58) contacts the nut engagement surface.

9. A linkage rod (500, 600) for absorbing shocks and vibrations, comprising a housing (501, 601) having a first end, a second end and a central bore (502, 602); a bushing cap (505, 604) attached to the housing (501, 601) adjacent the first end, a shaft (528, 608) having a projecting end (526, 610), and a radially-extending load ring (534, 624), the load ring (534, 624) slidably mounted in the central bore (502, 602) of the housing (501, 601) and the projecting end (526, 610) extending outside the central bore (502, 602) and the second end of the housing (501, 601); means (520, 620) attached to the projecting end (526, 610) of the shaft (528, 608) for mounting the linkage rod (500, 600); and at least one resilient member (536A, 636A) positioned in the central bore against the load ring (534, 624) such that axial movement of the shaft (528, 608) relative to the housing (501, 601) causes compression of the resilient member (536A, 636A),
**characterised in that**
the bushing cap (505, 604) has a finger (508) located outside the central bore (502, 602), whereby means (512, 603) is attached to the finger (508) for mounting the linkage rod (500, 600), and in that the shaft has a snubbing end (532, 612) opposite the projecting end (526, 610) thereby defining the location of the load-ring (534, 624) between these ends, said axial movement is limited by the contact of the snubbing end (532, 612) with the bushing cap (505, 604).

10. A linkage rod as claimed in claim 9, **characterised in that** the bushing cap (505) has a central cavity (506) and the snubbing end (532) of the shaft is slidably positioned in the central cavity (506).

11. A linkage rod as claimed in claim 10,
**characterised in that**
a load washer (538) is mounted in the central bore (502) and a first resilient member (536A) is positioned between the load ring (534) and the load washer (538); and a washer cap (542) is secured to the second end of the housing (501) and a second resilient member (536B) is positioned between the load ring (534) and the washer cap (542).

12. A linkage rod as claimed in claim 11, **characterised in that** the means for mounting the linkage rod includes mounting members (512, 520, 603, 620) threadably mounted on the finger (508) of the bushing cap (505, 604) and on the projecting end (526, 610) of the shaft (528, 608).

13. A linkage rod as claimed in claim 9, **characterised in that** the shaft (608) has first and second radially-extending load rings (624, 626) spaced apart between the snubbing end (612) and the projecting end (610), the load rings (624, 626) slidably mounted within the central bore (602) of the housing (601) and a first resilient member (636B) positioned against the first load ring (624) and a second resilient member (636A) positioned against the second load ring (626), and axial movement of the shaft (608) compresses one of the resilient members (636A, 636B).

14. A linkage rod as claimed in claim 13, **characterised in that** a washer cap (614) is secured to the housing (601) adjacent the second end, the washer cap (614) having a central opening for the shaft (608), the first resilient member (636B) being positioned between the first load ring (624) and the washer cap (614), and the second resilient member (636A) being positioned between the second load ring (626) and the bushing cap (604).

15. A linkage rod (700) for absorbing shocks and vibrations, comprising a housing (703) having a first end, a second end and a central bore (704); a first shaft member (701) having an interior end (730) within said housing (703), an opposite projecting end and a radially-extending first load ring (716) located between said interior and projecting ends, the first load ring (716) being slidably mounted in the central bore (704), and the projecting end extending outside the first end of the housing (703); a second shaft member (702) having an interior end (730), an opposite projecting end and a radially-extending second load ring (706) located between the interior and projecting ends, the second load ring (706) being slidably mounted in the central bore (704), and the projecting end extending outside the second end of the housing (703); means (714, 712) attached to the projecting ends of the first (701) and second (702) shaft members for mounting the linkage rod (700); a first resilient member (718B) positioned in the central bore (704) between the first load ring (716) and a first means (720) for retaining the first resilient member (718B), axial movement of the first shaft member (701) in one direction relative to the housing (703) causing compression of the first resilient member (718B); and a second resilient member (708A) positioned in the central bore (704) between the second load ring (706) and a second means (709) for retaining the second resilient member (708A), axial movement of the second shaft member (702) in one direction relative to the housing (703) causing compression of the second resilient member (708A);
**characterised in that**
movement of the first (701) and second (702) shaft members is limited in compression by contact of the interior ends (730, 730) with one another.

16. A linkage rod as claimed in claim 15,
**characterised by**
first and second washer caps (722, 711) secured respectively adjacent the first and second ends of the housing (703), the first and second washer caps (722, 711) having central openings for the respective first (701) and second (702) shaft members;
a third resilient member (718A) positioned in the central bore (704) between the first washer cap (722) and the first load ring (716), axial movement of the first shaft member (701) in an opposite direction relative to the housing (703) causing compression of the third resilient member (718A); and
a fourth resilient member (708B) positioned in the central bore (704) between the second washer cap (711) and the second load ring (706), axial movement of the second shaft member (702) in an opposite direction relative to the housing (703) causing compression of the fourth resilient member (708B).

## Patentansprüche

1. Verbindungsstange (11) zur Dämpfung von Stößen und Schwingungen, mit einem langgestreckten Zylinder (14), der eine Zentralbohrung (22) aufweist, die an einem offenen Ende des Zylinders (14) offen ist; einem elastischen Teil (46), das in der Zentralbohrung (22) angeordnet ist; einem Dämpferdeckel (56), der an dem Zylinder (14) in der Nähe des offenen Endes befestigt ist, wobei der Dämpferdeckel (56) eine zentrale Öffnung aufweist mit einer radial einwärts gerichteten Wand (71); einer Kolbenanordnung (13), die gleitbar in der zentralen Öffnung des Dämpferdeckels (56) angeordnet ist, wobei die Kolbenanordnung (13) relativ zu dem Dämpferdeckel (56) und dem Zylinder (14) begrenzt axial beweglich ist, wobei die Bewegung der Kolbenanordnung (13) in einer Richtung ein Zusammendrücken des elastischen Teiles (46) verursacht; und einer Einrichtung (15, 16) zur Befestigung der Verbindungsstange (11),
**dadurch gekennzeichnet,** daß
die Bewegung in beiden Richtungen durch Berührung der Kolbenanordnung (13) mit der radial einwärts gerichteten Wand (71) begrenzt ist.

2. Verbindungsstange (11) nach Anspruch 1, **dadurch gekennzeichnet,** daß die Einrichtung (15, 16) zur Befestigung der Verbindungsstange (11) ein Befestigungsteil (16) zur Befestigung der Kolbenanordnung aufweist, die Kolbenanordnung (13) eine Dämpfungsmutter (58) aufweist, die an dem Befestigungsteil (16) befestigt ist, und die radial einwärts gerichtete Wand (71) zwischen dem Befestigungsteil (16) und der Dämpfungsmutter (58) eingeschlossen ist.

3. Verbindungsstange (11) nach Anspruch 1 oder 2, **dadurch gekennzeichnet,** daß das elastische Teil (46) aus relativ feinen Litzen gekräuselten Drahtes besteht.

4. Verbindungsstange (11) nach zumindest einem der Ansprüche 1-3, **gekennzeichnet durch** ein Distanzrohr (38), das in der Zentralbohrung (22) angeordnet ist, wobei vor der Befestigung der Verbindungsstange (11) die Länge des Distanzrohres (38) den Betrag des Zusammendrückens des elastischen Teiles (46) festlegt.

5. Verbindungsstange (11) nach zumindest einem der Ansprüche 1-4, **dadurch gekennzeichnet,** daß die radial einwärts gerichtete Wand (71) hieran befestigte Dämpferbuchsen (78, 79) aufweist.

6. Verbindungsstange (11) nach Anspruch 2,
**dadurch gekennzeichnet,** daß
der Zylinder (14) ein geschlossenes Ende (24) aufweist, das dem offenen Ende gegenüberliegt;
die Einrichtung (15, 16) zur Befestigung der Verbindungsstange einen Befestigungsabschnitt (15) aufweist, der neben dem geschlossenen Ende (24) liegt;
das Befestigungsteil (16) einen Körperabschnitt (60);
einen Halsabschnitt (62) neben dem Körperabschnitt (60);
eine Schulter (65) aufweist, die zwischen den Körper- (60) und Halsabschnitten (62) ausgebildet ist; und
die Dämpfermutter (58) an dem Befestigungsteil (16) befestigt ist und von der Schulter (65) beabstandet ist, wobei die radial einwärts gerichtete Wand (71) zwischen der Schulter (65) und der Dämpfermutter (58) eingeschlossen ist, und
das Befestigungsteil (16) neben dem Körperabschnitt (60) axial relativ zu dem Dämperdeckel (56) begrenzt beweglich ist, wobei die Bewegung ein Zusammendrücken des elastischen Teiles (46) verursacht.

7. Verbindungsstange (11) nach zumindest einem der Ansprüche 1-6, **gekennzeichnet durch** ein Paar Lastplatten (40, 48), die in der Zentralbohrung (22) auf gegenüberliegenden Seiten des elastischen Teiles (46) angeordnet sind.

8. Verbindungsstange (11) nach Anspruch 6,
**dadurch gekennzeichnet,** daß
das Befestigungsteil (16) einen Kopfabschnitt (64) neben dem Halsabschnitt (62) aufweist;
eine Muttereingriffsoberfläche zwischen den Kopf- (64) und Halsabschnitten (62) ausgebildet ist; und
die Dämpfermutter (58) an dem Kopfabschnitt (64) befestigt ist, so daß die Dämpfermutter (58) die Muttereingriffsoberfläche berührt.

9. Verbindungsstange (500, 600) zur Dämpfung von Stößen und Schwingungen, mit einem Gehäuse (501, 601), das ein erstes Ende, ein zweites Ende und eine Zentralbohrung (502, 602) aufweist; einem Buchsendeckel (505, 605), der an dem Gehäuse (501, 601) in der Nähe des ersten Endes befestigt ist, einem Schaft (528, 608), der ein vorspringendes Ende (526, 610) und einen sich radial erstreckenden Lastring (534, 624) aufweist, wobei der Lastring (534, 624) gleitbar in der Zentralbohrung (502, 602) des Gehäuses (501, 601) angebracht ist, und sich das vorspringende Ende (526, 610) außerhalb der Zentralbohrung (502, 602) und des zweiten Endes des Gehäuses (501, 601) erstreckt; einer Einrichtung (520, 620), die an dem vorspringenden Ende (526, 610) des Schaftes (528, 608) befestigt ist, zur Befestigung der Verbindungsstange (500, 600); und zumindest einem elastischen Teil (536A, 636A), das in der Zentralbohrung an den Lastring (534, 624) stoßend angeordnet ist, derart, daß eine axiale Bewegung des Schafts (528, 608) relativ zu dem Gehäuse (501, 601) ein Zusammendrücken des elastischen Teiles (536A, 636A) verursacht,
**dadurch gekennzeichnet,** daß
der Buchsendeckel (505, 604) einen Finger (508) aufweist, der außerhalb der Zentralbohrung (502, 602) angeordnet ist, wobei eine Einrichtung (512, 603) zur Befestigung der Verbindungsstange (500, 600) an dem Finger (508) befestigt ist, und daß der Schaft ein Dämpferende (532, 612) gegenüber dem vorspringenden Ende (526, 612) aufweist, um hierdurch die Lage des Lastringes (534, 624) zwischen diesen Enden zu begrenzen, wobei die Axialbewegung durch die Berührung des Dämpferendes (532, 612) mit der Deckelbuchse (505, 604) begrenzt ist.

10. Verbindungsstange nach Anspruch 9, **dadurch gekennzeichnet,** daß der Buchsendeckel (505) eine zentrale Ausnehmung (506) aufweist und das Dämpferende (532) des Schaftes gleitbar in der zentralen Ausnehmung (506) angeordnet ist.

11. Verbindungsstange nach Anspruch 10,
**dadurch gekennzeichnet,** daß
eine Lastscheibe (538) in der Zentralbohrung (502) befestigt ist und ein erstes elastisches Teil (536A) zwischen dem Lastring (534) und der Lastscheibe (538) positioniert ist; und ein Scheibendeckel (542) an dem zweiten Ende des Gehäuses (501) befestigt ist und ein zweites elastisches Teil (536B) zwischen dem Lastring (534) und dem Scheibendeckel (542) positioniert ist.

12. Verbindungsstange nach Anspruch 11, **dadurch gekennzeichnet,** daß die Einrichtung zur Befestigung der Verbindungsstange Befestigungsteile (512, 520, 603, 620) aufweist, die schraubbar an dem Finger (508) der Deckelbuchse (505, 604) und an dem vorspringenden Ende (526, 610) des Schaftes (528, 608) befestigt sind.

13. Verbindungsstange nach Anspruch 9, **dadurch gekennzeichnet,** daß der Schaft (608) erste und zweite sich radial erstreckende Lastringe (624, 626) aufweist, die zwischen dem Dämpferende (612) und dem vorspringenden Ende (610) beabstandet angeordnet sind, wobei die Lastringe (624, 628) gleitbar in der Zentralbohrung (602) des Gehäuses (601) angebracht sind und ein erstes elastischen Teil (636B) an den ersten Lastring (624) stoßend angeordnet ist und ein zweites elastischen Teil (636A) an den zweiten Lastring (626) stoßend angeordnet ist, und eine Axialbewegung des Schaftes (608) eines der elastischen Teile (636A, 636B) zusammendrückt.

14. Verbindungsstange nach Anspruch 13, **dadurch gekennzeichnet,** daß ein Scheibendeckel (614) an dem Gehäuse (601) in der Nähe des zweiten Endes befestigt ist, wobei der Scheibendeckel (614) eine zentrale Öffnung für den Schaft (608) aufweist, das erste elastische Teil (636B) zwischen dem ersten Lastring (624) und dem Scheibendeckel (614) angeordnet ist, und das zweite elastische Teil (636A) zwischen dem zweiten Lastring (626) und der Deckelbuchse (604) angeordnet ist.

15. Verbindungsstange (700) zur Dämpfung von Stößen und Schwingungen, mit einem Gehäuse (703), das ein erstes Ende, ein zweites Ende und eine Zentralbohrung (704) aufweist; einem erstn Schaftteil (701), das ein inneres Ende (730) in dem Gehäuse (703), ein gegenüberliegend vorspringendes Ende und einen sich radial erstreckenden ersten Lastring (716) aufweist, der zwischen dem inneren und dem vorspringenden Ende liegt, wobei der erste Lastring (716) gleitbar in der Zentralbohrung (704) angeordnet ist, und sich das vorspringende Ende außerhalb des ersten Endes des Gehäuses (703) erstreckt; einem zweiten Schaftteil (702), das ein inneres Ende (730), ein gegenüberliegend vorspringendes Ende und einen sich radial erstreckenden zweiten Lastring (706) aufweist, der zwischen den inneren und äußeren Enden liegt, wobei der zweite Lastring (706) gleitbar in der Zentralbohrung (704) angeordnet ist, und sich das vorspringende Ende außerhalb des zweiten Endes des Gehäuses (703) erstreckt;
einer Einrichtung (714, 712), die an den vorspringenden Enden der ersten (701) und zweiten (702) Schaftteile befestigt ist, zur Befestigung der Verbindungsstange (700); einem ersten elastischen Teil (718B), das in der Zentralbohrung (704) zwischen dem ersten Lastring (716) und einer ersten Einrichtung (720) zur Abstützung des ersten elastischen Teiles (718B) angeordnet ist, wobei eine Axialbewegung des ersten Schaftteiles (701) in einer Richtung relativ zu dem Gehäuse (703) ein Zusammendrücken des ersten elastischen Teiles (718B) verursacht; und einem zweiten elastischen Teil (708A), das in der Zentralbohrung (704) zwischen dem zweiten Lastring (706) und einer zweiten Einrichtung (709) zur Abstützung des zweiten elastischen Teils (708A) angeordnet ist, wobei eine Axialbewegung des zweiten Schaftteiles (702) in einer Richtung relativ zu dem Gehäuse (703) ein Zusammendrücken des zweiten elastischen Teiles (708A) verursacht;
**dadurch gekennzeichnet,** daß
eine Bewegung des ersten (701) und zweiten (702) Schaftteiles beim Zusammendrücken durch gegenseitige Berührung der inneren Enden (730, 730) begrenzt ist.

16. Verbindungsstange nach Anspruch 15,
**gekennzeichnet durch**
erste und zweite Scheibendeckel (722, 711), die in der Nähe des ersten bzw. zweiten Endes des Gehäuses (703) befestigt sind, wobei die ersten und zweiten Scheibendeckel (722, 711) zentrale Öffnungen für die jeweils ersten (701) und zweiten (702) Schaftteile aufweisen;
ein drittes elastisches Teil (718A), das in der Zentralbohrung (704) zwischen dem ersten Scheibendeckel (722) und dem ersten Lastring (716) angeordnet ist, wobei eine Axialbewegung des ersten Schaftteiles (701) in einer entgegengesetzten Richtung relativ zu dem Gehäuse (703) ein Zusammendrücken des dritten elastischen Teiles (718A) verursacht;
und ein viertes elastisches Teil (708B), das in der Zentralbohrung (704) zwischen dem zweiten Scheibendeckel (711) und dem zweiten Lastring (706) angeordnet ist, wobei eine Axialbewegung des zweiten Schaftteiles (704) in einer entgegengesetzten Richtung relativ zu dem Gehäuse (703) ein Zusammendrücken des vierten elastischen Teiles (708B) verursacht.

## Revendications

1. Bielle de liaison (11) pour absorber les chocs et les vibrations, comprenant un cylindre allongé (14) ayant un alésage central (22) ouvert à une extrémité ouverte du cylindre (14); un organe élastique (46) disposé dans l'alésage central (22); un capuchon amortisseur (56) fixé au cylindre (14) de manière adjacente à l'extrémité ouverte, le capuchon amortisseur (56) ayant une ouverture centrale ainsi qu'une paroi (71) orientée radialement vers l'intérieur; un ensemble de piston (13) disposé coulissant dans l'ouverture centrale du capuchon amortisseur (56), l'ensemble de piston (13) étant capable d'effectuer un mouvement axial limité par rapport au capuchon amortisseur (56) et au cylindre (14), le déplacement de l'ensemble de piston (13) dans une direction provoquant une compression de l'organe élastique (46), et des moyens (15, 16) pour monter la bielle de liaison (11),
caractérisée en ce que
le déplacement est limité dans deux directions par un contact de l'ensemble de piston (13) avec la paroi (71) orientée radialement vers l'intérieur.

2. Bielle de liaison (11) selon la revendication 1, caractérisée en ce que le moyen (15, 16) pour monter la bielle de liaison (11) comprend un organe de montage (16) pour monter l'ensemble de piston, l'ensemble de piston (13) comprenant un écrou amortisseur (58) fixé à l'organe de montage (16), et la paroi (71) orientée radialement vers l'intérieur est piégée entre l'organe de montage et l'écrou amortisseur (58).

3. Bielle de liaison (11) selon la revendication 1 ou 2, caractérisée en ce que l'organe élastique (46) est formé à partir de torons relativement fins de fil serti.

4. Bielle de liaison (11) selon au moins l'une des revendications 1 à 3, caractérisée par un tube d'espacement (38) disposé dans l'alésage central (22), la longueur du tube d'espacement (38) établissant la valeur de compression de l'organe élastique (46), avant le montage de la bielle de liaison (11).

5. Bielle de liaison (11) selon au moins l'une des revendications 1 à 4, caractérisée en ce que la paroi (71) orientée radialement vers l'intérieur comporte des douilles d'amortissement (78, 79).

6. Bielle de liaison (11) selon la revendication 2,
caractérisée en ce que
le cylindre (14) a une extrémité fermée (24) opposée à l'extrémité ouverte;
le moyen (15, 16) pour monter la bielle de liaison comprend une partie de montage (15) adjacente à l'extrémité fermée (24); l'organe de montage comporte :
une partie de corps (60);
une partie de col (62) adjacente à la partie de corps (60);
un épaulement (65) formé entre les parties de corps (60) et de col (62); et
l'écrou amortisseur (68) est fixé à l'organe de montage (16) et est espacé de l'épaulement (65), dans lequel la paroi (71) orientée radialement vers l'intérieur est piégée entre l'épaulement (65) et l'écrou amortisseur (58), et
l'organe de montage (16) adjacent à la partie de corps (60) est capable d'effectuer un déplacement axial limité par rapport au capuchon amortisseur (56), le déplacement provoquant une compression de l'organe élastique (46).

7. Bielle de liaison (11) selon au moins l'une des revendications 1 à 6, caractérisée par un couple de plaques de chargement (40, 48) disposées dans l'alésage central (22), sur les côtés opposés de l'organe élastique (46).

8. Bielle de liaison (11) selon la revendication 6,
caractérisée en ce que
l'organe de montage (16) a une partie de tête (64) adjacente à la partie de col (62);
une surface d'engagement d'écrou est formée entre les parties de tête (64) et de col (62); et
l'écrou amortisseur (58) est fixé à la partie de tête (64) de manière que l'écrou amortisseur (58) vienne au contact de la surface d'engagement d'écrou.

9. Bielle de liaison (500, 600) pour absorber les chocs et les vibrations, comprenant un boîtier (501, 601) ayant une première extrémité, une deuxième extrémité et un alésage central (502, 602); un capuchon de douille (505, 604) fixé au boîtier (501, 601) de manière adjacente à la première extrémité, un arbre (528, 608) ayant une extrémité saillante (526, 610), et une bague de chargement (534, 624) s'étendant radialement, la bague de chargement (534, 624) montée coulissante dans l'alésage central (502, 602) du boîtier (501, 601) et l'extrémité saillante (526, 610) s'étendant vers l'extérieur de l'alésage central (502, 602) et la deuxième extrémité du boîtier (501, 601); des moyens (520, 620) fixés à l'extrémité saillante (526, 610) de l'arbre (528, 608) pour monter la bielle de liaison (500, 600); et au moins un organe élastique (536A, 636A) disposé dans l'alésage central contre la bague de chargement (534, 624), de manière qu'un déplacement axial de l'arbre (528, 608) par rapport au boîtier (501, 601) provoque une compression de l'organe élastique (536A, 636A),
caractérisée en ce que
le capuchon de douille (505, 604) a un doigt (508) situé à l'extérieur de l'alésage central (502, 602), de manière qu'un moyen (512, 603) soit fixé au doigt (508) pour le montage de la bielle de liaison (500, 600), et en ce que l'arbre présente une extrémité d'amortissement (532, 612) opposée à l'extrémité saillante (526, 610), de manière à définir l'emplacement de la bague de chargement (534, 624) entre ces extrémités, ledit déplacement axial est limité par le contact de l'extrémité d'amortissement (532, 612) avec le capuchon de douille (505, 604).

10. Bielle de liaison selon la revendication 9, caractérisée en ce que le capuchon de douille (505) a une cavité centrale (506) et l'extrémité d'amortissement (532) de l'arbre est disposée coulissante dans la cavité centrale (506).

11. Bielle de liaison selon la revendication 10,
caractérisée en ce que
une rondelle de chargement (538) est montée dans l'alésage central (502) et un premier organe élastique (536A) est placé entre la bague de chargement (534) et la rondelle de chargement (538); et un capuchon à rondelle (542) est fixé à la deuxième extrémité du boîtier (501) et un deuxième organe élastique (536B) est placé entre la bague de chargement (534) et le capuchon à rondelle (542).

12. Bielle de liaison selon la revendication 11, caractérisée en ce que le moyen de montage de la bielle de liaison comprend des organes de montage (512, 520, 603, 620) montés par vissage sur le doigt (508) du capuchon à douille (505, 604) et sur l'extrémité saillante (526, 610) de l'arbre (528, 608).

13. Bielle de liaison selon la revendication 9, caractérisée en ce que l'arbre (608) a des première et deuxième bagues de chargement (624, 626) s'étendant radialement espacés entre l'extremité d'amortissement (612) et l'extrémité saillante (610), les bagues de chargement (624, 626) montées coulissantes dans l'alésage central (602) du boîtier (601) et un premier organe élastique (636B) disposé contre la première bague de chargement (624) et un deuxième organe élastique (636A) disposé contre la deuxième bague de chargement (626), et le déplacement axial de l'arbre (608) provoque la compression de l'un des organes élastiques (636A, 636B).

14. Bielle de liaison selon la revendication 13, caractérisé en ce qu'un capuchon à rondelle (614) est fixé au boîtier (601) de manière adjacente à la deuxième extrémité, le capuchon à rondelle (614) ayant une ouverture centrale pour l'arbre (608), le premier organe élastique (636B) étant disposé entre la première bague de chargement (624) et le capuchon à rondelle (614), et le deuxième organe élastique (636A) étant disposé entre la deuxième bague de chargement (626) et le capuchon à douille (604).

15. Bielle de liaison (700) pour absorber les chocs et les vibrations, comprenant un boîtier (703) ayant une première extrémité, une deuxième extrémité et un alésage central (704); un premier organe formant arbre (701) ayant une extrémité intérieur (730) dans ledit boîtier (703), une extrémité saillante opposée et une première bague de chargement (716) s'étendant radialement, situées entre lesdites extrémités intérieure et saillante, la première bague de chargement (716) étant montée coulissante dans l'alésage central (704), et l'extrémité saillante s'étendant vers l'extérieur de la première extrémité du boîtier (703); un deuxième organe formant arbre (702) ayant une extrémité intérieure (730), une extrémité saillante opposée et une deuxième bague de chargement (706) s'étendant radialement, situées entre les extrémités intérieure et saillante, la deuxième bague de chargement (706) étant montée coulissante dans l'alésage central (704), et l'extrémité saillante s'étendant vers l'extérieur de la deuxième extrémité du boîtier (703); des moyens (714, 712) fixés aux extrémités saillantes des premier (701) et deuxième (702) organes formant arbre pour le montage de la bielle de liaison (700); un premier organe élastique (718B) disposé dans l'alésage central (704) entre la première bague de chargement (716) et un premier moyen (720) pour maintenir le premier organe élastique (718B), le déplacement axial du premier organe formant arbre (701) dans une direction donnée par rapport au boîtier (703) provoquant une compression du premier organe élastique (718B); et un deuxième organe élastique (708A) disposé dans l'alésage central (704) entre la deuxième bague de chargement (706) et un deuxième moyen (709) pour maintenir le deuxième organe élastique (708A), le déplacement axial du deuxième organe formant arbre (702) dans une direction donnée par rapport au boîtier (703) provoquant une compression du deuxième organe élastique (708A);
caractérisée en ce que
le déplacement des premier (701) et deuxième (702) organes formant arbre est limité en compression par le contact des extrémités intérieures (730, 730) entre elles.

16. Bielle de liaison selon la revendication 15,
caractérisée par
des premier et deuxième capuchons à rondelle (722, 711) respectivement fixés de manière adjacente aux première et deuxième extrémités du boîtier (703), les premier et deuxième capuchons à rondelle (722, 711) ayant des ouvertures centrales pour les premier (701) et deuxième (702) organes formant arbre respectifs;
un troisième organe élastique (718A) disposé dans l'alésage central (704), entre le premier capuchon à rondelle (722) et la première bague de chargement (716), le déplacement axial du premier organe formant arbre (701) dans une direction donnée par rapport au boîtier (703) provoquant une compression du troisième organe élastique (718A); et
un quatrième organe élastique (708B) disposé dans l'alésage central (704) entre le deuxième capuchon à rondelle (711) et la deuxième bague de chargement (706), le déplacement axial du deuxième organe formant arbre (702) dans une direction opposée par rapport au boîtier (703) provoquant la compression du quatrième organe élastique (708B).
